(19) Europäisches Patentamt
European Patent Office
Office européen des brevets

(11) Veröffentlichungsnummer: **0 154 203**
**A2**

# (12) EUROPÄISCHE PATENTANMELDUNG

(21) Anmeldenummer: **85101410.0**

(22) Anmeldetag: **11.02.85**

(51) Int. Cl.[4]: **C 09 B 62/20**
D 06 P 3/10, D 06 P 3/66

(30) Priorität: **21.02.84 DE 3406232**

(43) Veröffentlichungstag der Anmeldung: **11.09.85 Patentblatt 85/37**

(84) Benannte Vertragsstaaten: **CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Weitz, Robert, Dr.**
**Roggendorfstrasse 67**
**D-5000 Köln 80(DE)**

(72) Erfinder: **Neeff, Rütger, Dr.**

**Verstorben(DE)**

(72) Erfinder: **Schwaebel, Richard, Dr.**
**Berta-von-Suttner-Strasse 21**
**D-5090 Leverkusen(DE)**

## (54) Faserreaktive Formazanfarbstoffe.

(57) Formazanfarbstoffe der Formel

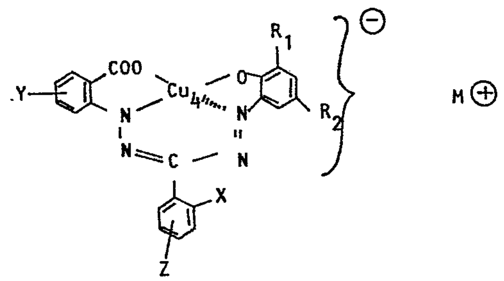

mit den in der Beschreibung genannten Substituentenbedeutungen eignen sich hervorragend zum Färben und Bedrucken von Hydroxylgruppen- und Stickstoff-haltigen Materialien in blauen Farbtönen mit guten Echtheiten.

EP 0 154 203 A2

Croydon Printing Company Ltd.

0154203

BAYER AKTIENGESELLSCHAFT 5090 Leverkusen, Bayerwerk
Konzernverwaltung RP
Patentabteilung My/bo/c

Faserreaktive Formazanfarbstoffe

Die vorliegende Erfindung betrifft neue faserreaktive, kupferhaltige Formazanfarbstoffe und deren Verwendung zum Färben oder Bedrucken von Hydroxylgruppen- oder Stickstoff-haltigen organischen Materialien, besonders Textilmaterialien, sowie die unter Verwendung der neuen Farbstoffe gefärbten bzw. bedruckten Materialien.

Die neuen Farbstoffe entsprechen der Formel

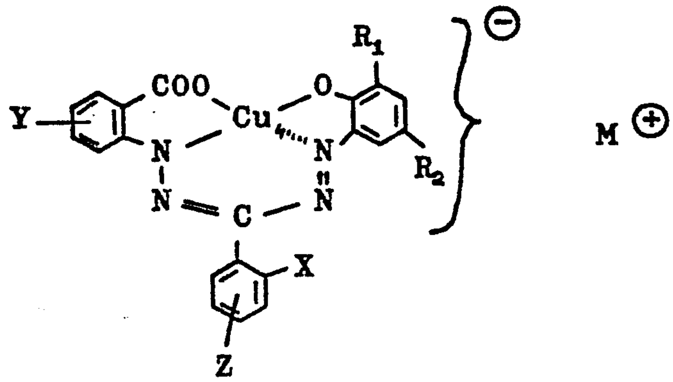

(I)

worin

M Wasserstoff oder das Äquivalent eines Metalls,
Y, Z Wasserstoff oder die Sulfogruppe,

X  Wasserstoff, Halogen oder die Sulfogruppe,

$R_1$ und $R_2$ die Sulfogruppe oder die Gruppe

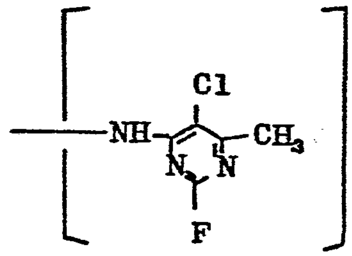

wobei $R_1$ und $R_2$ verschieden sind,

bedeuten.

Halogen steht hier vorzugsweise für Chlor und Fluor.
M bedeutet vorzugsweise ein Alkalimetall oder ein Erdalkalimetall, wie insbesondere Natrium, Lithium, Kalium oder Calcium.

Die neuen Verbindungen der allgemeinen Formel (I) können in saurer Form vorliegen. Bevorzugt liegen sie in Form ihrer Salze, insbesondere der obengenannten Alkali- und Erdalkalimetallsalze vor. Sie finden, bevorzugt in Form der Alkalimetallsalze, Verwendung zum Färben (im allgemeinen Sinne einschließlich des Bedruckens) von hydroxylgruppenhaltigen, amino- und carbonamidgruppenhaltigen Materialien.

Von den erfindungsgemäßen Verbindungen der allgemeinen Formel (I) sind diejenigen bevorzugt, in welchen Y die Sulfonsäuregruppe, X Chlor oder die Sulfonsäuregruppe, Z Wasserstoff bedeutet und $R_1$ und $R_2$ die obengenannte Bedeutung haben.

Insbesondere sind bevorzugt Farbstoffe der Formel

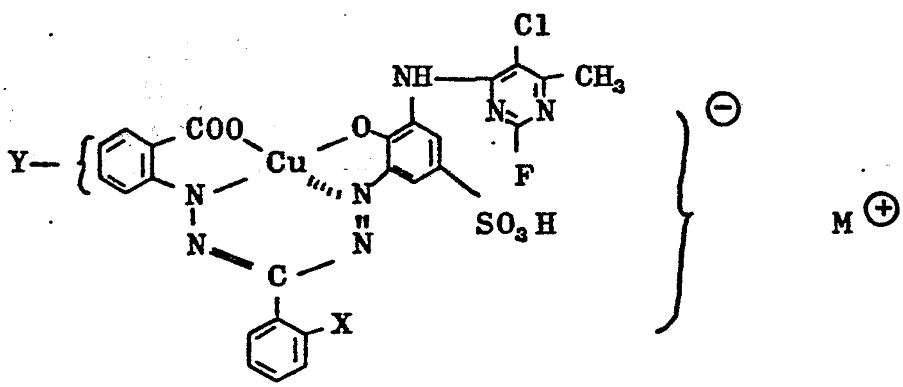

(III)

in welchen Y die Sulfonsäuregruppe bedeutet und X und M die obengenannte Bedeutung haben.

Die erfindungsgemäßen Farbstoffe können nach an sich bekannten Methoden hergestellt werden.

Man erhält sie beispielsweise, indem man die Diazoniumverbindung eines Amins der allgemeinen Formel

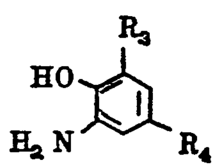

(IV)

in der

$R_3$ und $R_4$ verschieden sind und für die Sulfonsäuregruppe bzw. eine nicht reaktive Acylamino-Gruppe, bevorzugt Acetylamino-, bedeuten,

mit einer Kupplungskomponente der allgemeinen Formel

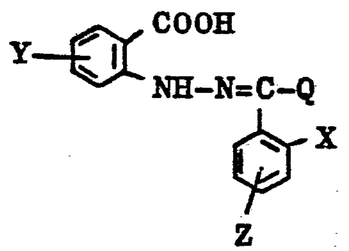

(V)

in welcher
Y, Z und X die obengenannte Bedeutung haben und
Q Wasserstoff oder einen durch Azokupplung ersetzbaren Substituenten bedeutet, zum Formazan kuppelt. Hierbei kann gleichzeitig oder nachfolgend die Umsetzung mit einem Kupfer einführenden Mittel zum Kupfer-Formazan erfolgen.

Bedeutet Q in Kupplungskomponenten der allgemeinen Formel V einen durch Azokupplung ersetzbaren Substituenten, so handelt es sich dabei bevorzugt um die Formyl- oder Carboxylgruppe oder um einen in die Carboxylgruppe überführbaren Substituenten, z.B. eine Cyangruppe, Carbonsäureestergruppe oder Carbonsäureamidgruppe.

Nach Abspaltung des Acylrestes nach an sich bekannten Methoden wird die Reaktivgruppe durch Kondensation mit 2,4-Difluor-5-chlor-6-methyl-pyrimidin eingeführt.

Die Umsetzung mit dem Pyrimidin erfolgt in wäßrigen oder organisch-wäßrigen Medien bei 20 - 70°C in Anwesenheit von säurebindenden Mitteln wie Natriumcarbonat, Natriumbicarbonat, verdünnter Natronlauge, Lithiumcarbonat oder verdünnter Lithiumhydroxidlösung.

Als Aminophenole der Formel IV sind bevorzugt 5-(Acetylamino)-3-amino-2-hydroxybenzolsulfonsäure und 3-(Acetylamino)-5-amino-4-hydroxybenzolsulfonsäure.

Kupplungskomponenten der allgemeinen Formel V sind nach verschiedenen Methoden darstellbar. Man erhält sie beispielsweise, indem man ein Aldehyd der Formel

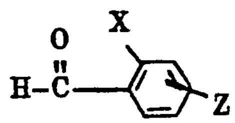

(VI)

mit einem Hydrazin der Formel

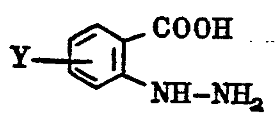

(VII)

zu einem Arylhydrazin der Formel V kondensiert. Hier haben X, Z und Y die obengenannte Bedeutung.

Als Aldehyde kommen für die Herstellung der Arylhydrazone der Formel (V) z.B. die folgenden in Frage:

Benzaldehyd,
2-Chlorbenzaldehyd,
2-Chlor-5-sulfobenzaldehyd,
2-Sulfobenzaldehyd,
2,4-Disulfobenzaldehyd.

Hydrazine der Formel VII sind nach üblichen Methoden darstellbar, z.B. indem man die entsprechenden Aminobenzolcarbonsäuren diazotiert und deren Diazoniumverbindungen

mit Salzen der schwefligen Säure unter Verseifung der intermediär entstehenden N-Sulfonsäuren mit starker Mineralsäure oder mit Alkalistanniten zum Arylhydrazin der Formel VII reduziert. Als Aminobenzolcarbonsäuren sind bevorzugt

Anthranilsäure,
4-Sulfoanthranilsäure und
5-Sulfoanthranilsäure.

Die Kondensation der Aldehyde mit den Hydrazinen der Formel VII zu den Arylhydrazonen der Formel V erfolgt sehr leicht, gegebenenfalls durch Erwärmen in wäßriger oder organischer Lösung.

Die Kupplung der Diazoniumverbindung von Aminen der Formel IV mit den Kupplungskomponenten der Formel V zu den schwermetallfreien Formazanfarbstoffen wird nach bekannten Methoden durchgeführt. Man arbeitet dabei vorzugsweise in einem schwach sauren bis schwach alkalischen Medium und bei einer Temperatur von 0 bis ungefähr 40°C, wobei anschließend durch die Zugabe von Kupfer einführenden Mitteln die metallfreien Formazanfarbstoffe in die kupferhaltigen Formazanfarbstoffe übergeführt werden. Zweckmäßig gibt man aber das kupfereinführende Mittel gleichzeitig bei der Kupplungsreaktion zu.

Das Metall Kupfer wird dabei zweckmäßig in Form seiner wasserlöslichen einfachen oder komplexen Salze von Mineralsäuren oder niederen Fettsäuren, wie Kupfersulfat

oder Kupferacetat eingesetzt. Bei Verwendung der mineralsauren Salze arbeitet man zweckmäßig in Gegenwart eines mineralsäureabstumpfenden Mittels, als welches insbesondere Alkalihydroxide oder -carbonate oder Alkalisalze niederer Fettsäuren, wie beispielsweise Alkaliacetat oder Alkalisalze mehrbasischer Sauerstoffsäuren des Phosphors oder Ammoniak oder tert.-Stickstoffbasen, wie z.B. Pyridin in Frage kommen. Gegebenenfalls können auch komplexe Salze des Kupfers verwendet werden.

Das schwermetalleinführende Mittel wird in mindestens äquimolekularen Mengen verwendet, so daß pro Mol Farbstoff mindestens ein Atom Schwermetall vorhanden ist. Die Metallisierung erfolgt üblicherweise schon bei Raumtemperatur vollständig; vielfach ist aber ein Erwärmen bis auf etwa 80°C erforderlich. Ohne Komplexbildner wird die Metallisierung zweckmäßig bei pH-Werten von 4 - 8 durchgeführt, während in Gegenwart von Komplexbildnern, wie Wein- oder Zitronensäure, vorzugsweise bei einem pH-Wert zwischen ungefähr 8 und 14 gearbeitet wird.

Eine Variante des Verfahrens zur Herstellung acylierbarer Amino-Formazane besteht in der Verwendung von Aminophenolen der Formel (IV), in denen für $R_3$ bzw. $R_4$ statt der Acylaminogruppe eine Nitrogruppe steht. Die nach der oben beschriebenen Methode erhältlichen Nitro-Formazane sind bekannt und zu den entsprechenden Amino-Formazanen reduzierbar.

Die erfindungsgemäßen Formazan-Reaktivfarbstoffe können isoliert und zu trockenen Färbepräparaten verarbeitet

werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- oder Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung für Farbstoffe, herstellen.

Die Farbstoffe der Formeln I - III eignen sich in hervorragender Weise zum Bedrucken und Färben von textilen Gebilden aus nativer und regenerierter Zellulose sowie von natürlichen oder synthetischen Polypeptiden.

Die mit diesen Farbstoffen in hohen Ausbeuten erhältlichen Färbungen zeichnen sich durch eine hohe Faser-Farbstoff-Bindungsstabilität aus sowie durch eine hervorragende Stabilität gegenüber Oxidationsmitteln wie peroxid- oder chlorhaltige Waschmittel. Die Auswaschbarkeit der beim Färben oder Drucken entstehenden Hydrolyseprodukte ist ausgezeichnet.

Beispiel 1

67,6 Teile der Kupferkomplexverbindung des N-(2-Hydroxy-3-aminophenyl-5-sulfonsäure)-N'-(2'-carboxyphenyl-5'-sulfonsäure)-ms-2"-sulfophenylformazans /erhalten durch Kuppeln von diazotierter 6-Acetylamino-2-amino-1-hydroxybenzol-4-sulfonsäure mit dem Hydrazon aus Benzaldehyd-2-sulfonsäure und Phenylhydrazin-2-carbonsäure-5-sulfonsäure nach an sich bekannter Methode, Kupferung und Verseifung der Acetylaminogruppe mit verdünnter Natronlauge/ werden in 250 Volumenteilen Wasser bei pH = 7 gelöst. Zu dieser Lösung werden innerhalb 2 Stunden bei 35 - 40°C 18 Teile 2,4-Difluor-5-chlor-6-methylpyrimidin zugegeben und durch gleichzeitiges Zutropfen einer verdünnten Natriumhydroxidlösung der pH-Wert bei 6,5 - 7,0 gehalten. Das Kondensationsprodukt wird nach vollständiger Umsetzung (Kontrolle durch Dünnschichtchromatographie) durch Zugabe von Natriumchlorid abgeschieden, nach Abkühlen auf 20°C abfiltriert und bei 60°C im Vakuum getrocknet. Der Farbstoff der in Form der freien Säure der Formel

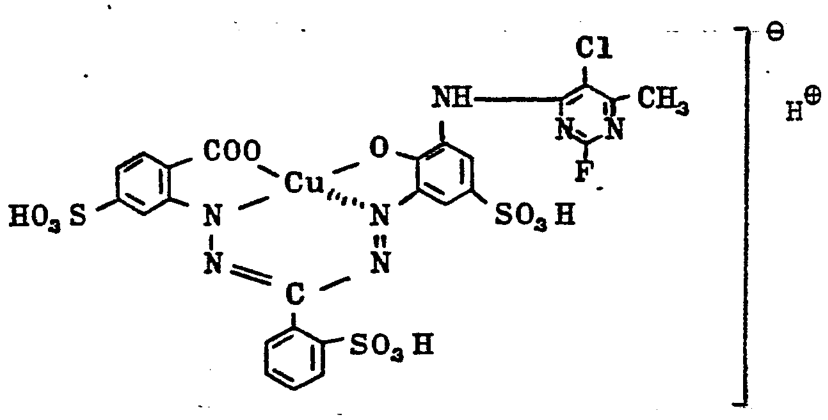

entspricht,

ist ein dunkles Pulver, das Zellulosefasern in echten, etwas rotstichig blauen Tönen färbt.

Beispiele 2 - 5

Verwendet man analog den Angaben in Beispiel 1 äquivalente Mengen der folgenden Amino-Formazane, so erhält man weitere Formazanreaktivfarbstoffe, die auf Baumwolle Färbungen mit ähnlich guten Eigenschaften ergeben. Der Farbton dieser Färbungen ist in der Tabelle angegeben.

Tabelle

| Nr. | Aminoformazan | Farbton |
|---|---|---|
| 2) | N-(2-Hydroxy-3-aminophenyl-5-sulfonsäure)-N'-(2'-carboxyphenyl-4'-sulfonsäure)-ms-(2"-sulfophenyl)-formazan, Cu-Komplex | rotstichig blau |
| 3) | N-(2-Hydroxy-3-aminophenyl-5-sulfonsäure)-N'-(2'-carboxyphenyl-5'-sulfonsäure)-ms-(2"-chlorphenyl)-formazan, Cu-Komplex | rotstichig blau |
| 4) | N-(2-Hydroxy-3-aminophenyl-5-sulfonsäure)-N'-(2'-carboxyphenyl-5'-sulfonsäure)-ms-(2"-chlor-5"-sulfophenyl)-formazan, Cu-Komplex | blau |
| 5) | N-(2-Hydroxy-3-aminophenyl-5-sulfonsäure)-N'-(2'-carboxyphenyl-5'-sulfonsäure)-ms-phenylformazan, Cu-Komplex | blau |
| 6) | N-(2-Hydroxy-3-aminophenyl-5-sulfonsäure)-N'-(2'-carboxyphenyl)-ms-(2",4"-disulfophenyl)formazan, Cu-Komplex | rotstichig blau |

Beispiel 7

67,6 g der Kupferkomplexverbindung des N-(2-Hydroxy-5-aminophenyl-3-sulfonsäure)-N'-(2'-carboxyphenyl-4'-sulfonsäure)-ms-2"-sulfonsäurephenylformazans (erhalten durch Kuppeln von diazotierter 4-Acetylamino-2-amino-1-hydroxybenzol-6-sulfonsäure mit dem Hydrazon aus Benzaldehyd-2-sulfonsäure und Phenylhydrazin-2-carbonsäure-4-sulfonsäure nach an sich bekannter Methode und anschließender Kupferung und Verseifung der Acetylaminogruppe mit verdünnter Natronlauge) werden in 400 ml Wasser neutral gelöst. Zu dieser Lösung werden innerhalb 2 Stunden bei 40 - 45°C 18,5 g 2,4-Difluor-5-chlor-6-methyl-pyrimidin bei einem pH-Wert von 6,0 - 6,5 zugetropft. Hierbei wird die freiwerdende Säure so mit einer Sodalösung neutralisiert, daß während der Kondensationszeit von etwa 2 Stunden ein pH von 6,5 gehalten wird.

Sobald kein Ausgangsfarbstoff mehr nachweisbar ist, wird der Farbstoff durch Zugabe von Natriumchlorid ahgeschieden, abfiltriert, mit verdünnter Natriumchloridlösung gewaschen und schließlich im Vakuum getrocknet. Der Farbstoff entspricht in Form der freien Säure der Formel

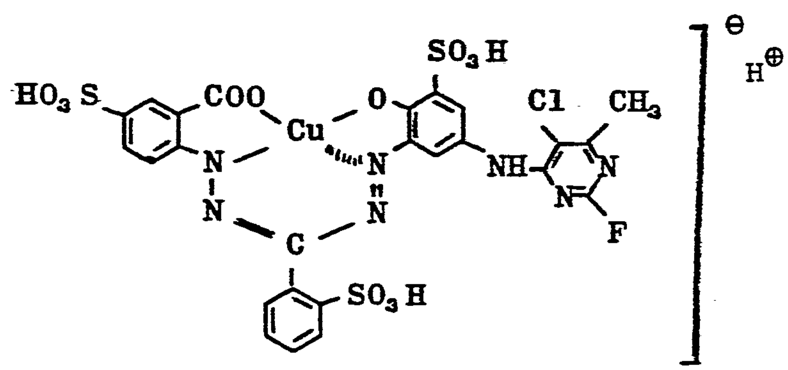

und färbt Baumwolle in echten blauen Tönen.

Patentansprüche

1. Faserreaktive Formazanfarbstoffe der Formel

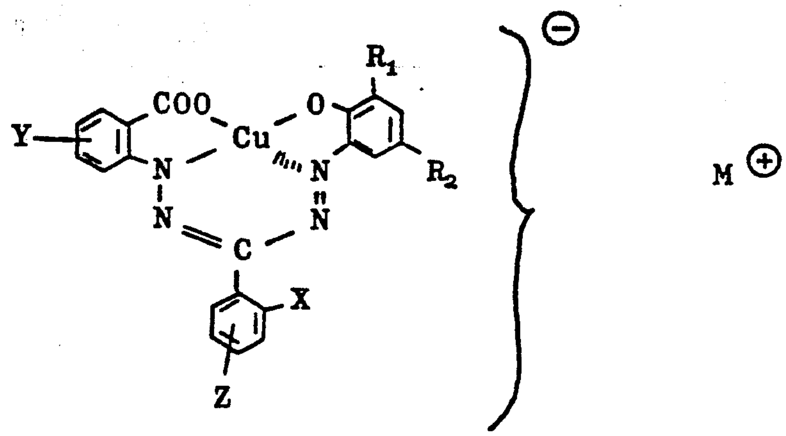

worin

M Wasserstoff oder das Äquivalent eines Metalls,
Y, Z Wasserstoff oder die $-SO_3H$-Gruppe,
X Wasserstoff, Halogen oder die $-SO_3H$-Gruppe,
$R_1$ und $R_2$ die $SO_3H$-Gruppe oder die Gruppe

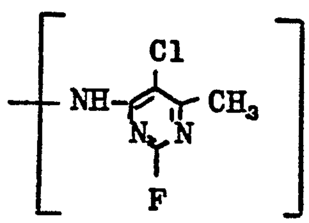

wobei $R_1$ und $R_2$ verschieden sind.

2. Faserreaktive Formazanfarbstoffe der Formel

0154203

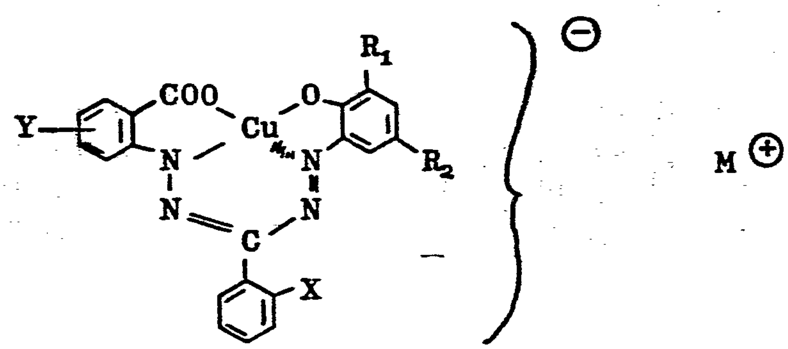

worin $R_1$, $R_2$ und M die in Anspruch 1 angegebene Bedeutung haben und

Y die $-SO_3H$-Gruppe,

X Chlor oder die $-SO_3H$-Gruppe bedeuten.

3. Faserreaktive Formazanfarbstoffe der Formel

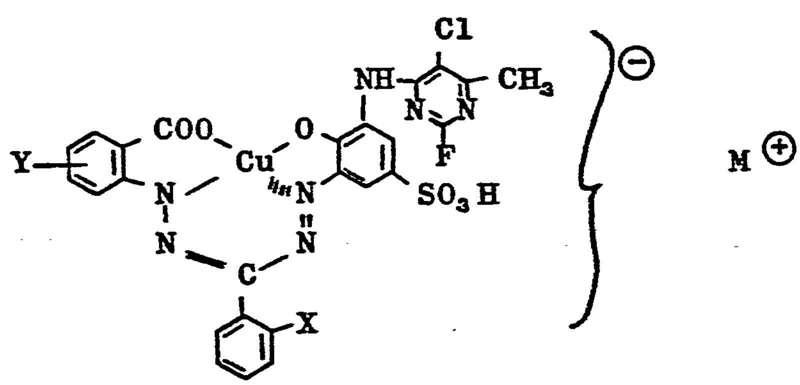

worin Y, X und M die in Anspruch 1 angegebene Bedeutung haben.

4. Verwendung der Farbstoffe der Ansprüche 1 - 3 zum Färben oder Bedrucken von Hydroxylgruppen-haltigen oder Stickstoff-haltigen Materialien.

5. Mit den Farbstoffen der Ansprüche 1 - 3 gefärbte oder bedruckte Hydroxylgruppen- oder Stickstoffhaltige Materialien.